# EUROPÄISCHE PATENTSCHRIFT

(11) **EP 1 653 581 B1**
(45) Veröffentlichungstag und Bekanntmachung des Hinweises auf die Patenterteilung: **26.09.2012**
(21) Anmeldenummer: 04025848.5
(22) Anmeldetag: 30.10.2004
(51) Int. Cl.: H02B 5/06

(54) **Schaltanlage**
Switchgear
Installation de commutation

(43) Veröffentlichungstag der Anmeldung: 03.05.2006
(73) Patentinhaber: ABB Technology AG, 8050 Zürich (CH)
(72) Erfinder: Betz, Thomas, Dr.-Ing., 63505 Langenselbod (DE)
(74) Vertreter: Miller, Toivo

(56) Entgegenhaltungen:
- US-A- 4 092 547

## Beschreibung

Die Erfindung betrifft eine metallgekapselte elektrische Schaltanlage, insbesondere eine gasisolierte Hochspannungsschaltanlage, gemäß dem Oberbegriff des Anspruchs 1.

Zur Verbindung von dreiphasigen metallgekapselten Schaltanlagen mit einer Freileitung kommen in der Regel Anschlussstücke zum Einsatz, welche einen rohrförmigen oder topfförmigen Kapselungskörper aufweisen, aus welchem eine der Anzahl der Phasenleiter entsprechende Anzahl von Freiluftdurchführungen herausragen, welche im folgenden als Anschlusselemente bezeichnet werden. Die Freiluftdurchführungen verfügen über je eine Anschlussstelle, an welchen je ein Seil der Freileitung anschließbar ist.

Die räumliche Anordnung der Freiluftdurchführungen und der Abstand der Anschlussstellen zueinander sind durch das Anschlussstück vorgegeben und nicht änderbar. Innerhalb des Anschlussstücks ist jede Freiluftdurchführung einem bestimmten Phasenleiter zugeordnet und an diesen angeschlossen. Ist eine Änderung dieser Zuordnung verlangt, so ist diese nur durch eine verhältnismäßig aufwendige Variation der Leiterführung im Inneren der Schaltanlage, beziehungsweise innerhalb des Anschlussstücks durchführbar. Jede Abweichung von der vorgegebenen Zuordnung bedingt somit eine Sonderkonstruktion.

Das Dokument US 4 092 547 offenbart eine Schaltanlage gemäss dem Oberbegriff des Anspruchs 1.

Der Erfindung liegt die Aufgabe zugrunde, eine Schaltanlage anzugeben, welche eine vereinfachte Anbindung an Freileitungen gestattet.

Diese Aufgabe wird erfindungsgemäß durch eine Schaltanlage mit den im Anspruch 1 genannten Merkmalen gelöst.

Erfindungsgemäß sind die Anschlussstücke von Anschlussmodulen gebildet, an denen jeweils ein Anschlusselement zur Verbindung mit je einem Freileitungsseil angebracht ist. Die einzelnen Anschlussmodule schließen dabei koaxial aneinander an und sind über koaxiale Rohrmodule mit der Schaltanlage verbunden. Dabei ist im Inneren jedes Anschlussmoduls das daran angebrachte Anschlusselement mit einem der Phasenleiter verbindbar.

Die Erfindung ist vorteilhaft bei dreiphasigen Hochspannungsschaltanlagen für Nennspannungen von 50kV bis 200kV anwendbar. Die Erfindung ist aber auch bei anderen Schaltanlagen anwendbar, beispielsweise bei metallgekapselten, luftisolierten Mittelspannungsschaltanlagen mit einer Nennspannung von 6 kV oder bei einer Hochspannungsschaltanlage mit einer Nennspannung von 200 kV und mehr. Auch eine Anwendung bei einer zweiphasigen Hochspannungsgleichstromschaltanlage ist denkbar.

Somit ist jede beliebige Zuordnung der Phasenleiter zu den Anschlusselementen verhältnismäßig einfach durchführbar. Ein weiterer Vorteil der Erfindung liegt in der verbesserten Handhabbarkeit der Anschlussmodule. Im Vergleich zu herkömmlichen mehrphasigen Anschlussstücken haben die einzelnen Anschlussmodule ein geringeres Gewicht und eine geringere räumliche Ausdehnung. Somit können die Anschlussmodule einfacher transportiert und an der Schaltanlage montiert werden.

Weiterhin ist die Produktion der Anschlussmodule vereinfacht, da alle in der Schaltanlage eingesetzten Anschlussmodule einen annähernd gleichartigen Aufbau aufweisen.

In einer vorteilhaften Ausgestaltung der Erfindung ist zwischen je zwei Anschlussmodulen mindestens ein Rohrmodul angeordnet. Durch Zwischenfügung eines solchen Rohrmoduls, beziehungsweise mehrerer Rohrmodule, ist der Abstand der Anschlussmodule und damit auch der Abstand der Anschlusselemente und der Abstand der Anschlussstellen zueinander beliebig änderbar.

Der Abstand der Anschlussstellen zueinander kann so bei höherer Nennspannung der Schaltanlage vergrößert werden. Weiterhin kann der Abstand so eingestellt werden, dass die Seile der Freileitung von den Anschlussstellen aus parallel bis zu dem benachbarten Freileitungsmast verlaufen.

Gemäß einer weiteren vorteilhaften Ausgestaltung der Erfindung ist ein Anschlussmodul aus einem Gussteil und einem Schweißteil zusammengesetzt. Das Gussteil, welches verhältnismäßig kostengünstig herstellbar ist, weist dabei einen Anschlussflansch zur Befestigung eines Anschlusselementes auf. Das Schweißteil ist mit verhältnismäßig geringem Aufwand in einer vorgebbaren Länge herstellbar. Somit ist es möglich, ein Anschlussmodul mit einer beliebigen Länge kostengünstig zu produzieren.

Weitere vorteilhafte Ausgestaltungen der Erfindung sind den weiteren Unteransprüchen zu entnehmen.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

### Es zeigen:

- Fig. 1: eine Seitenansicht einer Schaltanlage mit Freileitungsanschlüssen,
- Fig. 2 bis Fig. 4: je eine Schnittansicht durch die Schaltanlage nach Fig. 1 entlang der Schnittlinien A, B und C,
- Fig. 5: eine zweite Ausgestaltungsform der Schaltanlage nach Fig. 1,
- Fig. 6 bis Fig. 8: eine weitere Ausgestaltungsform von Anschlussmodulen und

- Fig. 9: ein Gehäuse eines Anschlussmoduls.

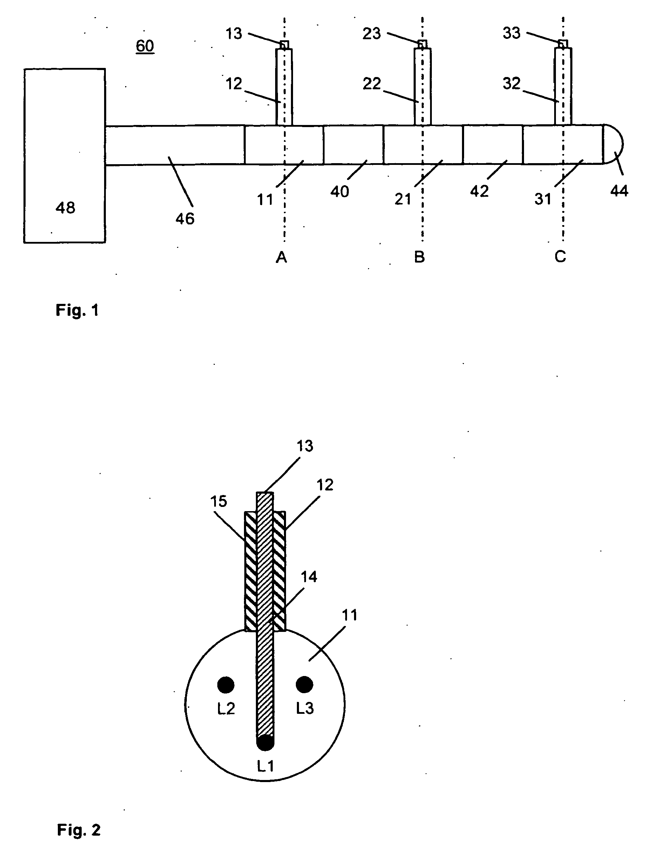

In Fig. 1 ist eine erste gasisolierte, metallgekapselte Schaltanlage 60 mit Freileitungsanschlüssen gemäß einer ersten Ausgestaltungsform in Seitenansicht dargestellt. Bei diesem Beispiel handelt es sich um eine dreiphasige Hochspannungsschaltanlage für eine Nennspannung von 110 kV.

Die hier gezeigte erste Schaltanlage 60 weist drei Anschlusselemente 12, 22, 32 zur Verbindung mit einer Freileitung auf. Hierzu verfügt das erste Anschlusselement 12 über eine erste Anschlussstelle 13, an welchem ein hier nichtgezeigtes Seil der Freileitung anschließbar ist. Entsprechend verfügen das zweite und dritte Anschlusselement 22, 32 über eine zweite, beziehungsweise dritte Anschlussstelle 23, 33.

Die Anschlusselemente 12, 22, 32 sind als zylindrische oder konische Freiluftdurchführungen ausgestaltet und weisen je einen hier nicht dargestellten, entlang ihrer Längsachse verlaufenden Verbindungsleiter auf, weicher jeweils von einem Isolierkörper ummantelt ist. Die Verbindungsleiter sind mit je einer der Anschlussstellen 13, 23, 33 verbunden, welche an einer Stirnseite je eines Anschlusselements 12, 22, 32 angeordnet sind.

Das erste Anschlusselement 12 ist an einem ersten Anschlussmodul 11 angeordnet, welches ein zylindrisches Gehäuse aufweist. Wie aus Fig. 2 ersichtlich, sind im Inneren des ersten Anschlussmoduls 11 drei Phasenleiter L1, L2, L3 parallel zur Mittelachse des zylindrischen Gehäuses geführt. Das erste Anschlusselement 12 ist radial nach außen vorspringend an dem ersten Anschlussmodul 11 angebracht. Dabei ist die Stirnseite des Anschlusselements 12, an welcher die erste Anschlussstelle 13 angeordnet ist, dem Gehäuse des Anschlussmoduls 11 abgewandt. Der in der Längsachse des ersten Anschlusselements 12 verlaufende Verbindungsleiter ist an den ersten Phasenleiter L1 angeschlossen.

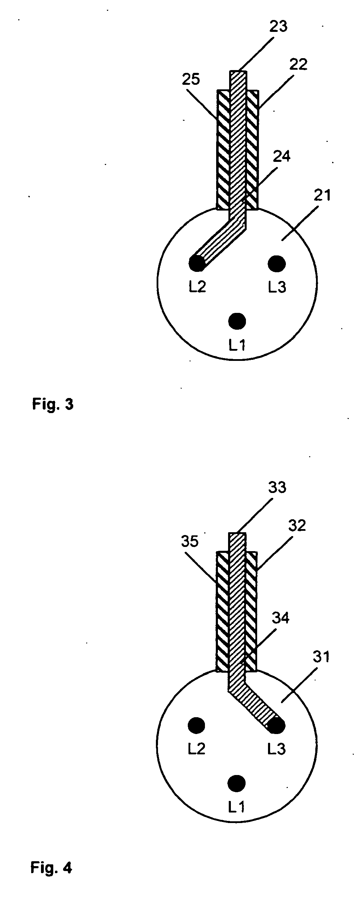

Weiterhin ist das zweite Anschlusselement 22 an einem zweiten Anschlussmodul 21 angebracht, wobei der Verbindungsleiter des zweiten Anschlusselements 22, wie aus Fig. 3 ersichtlich, mit dem Phasenleiter L2 verbunden ist. Ebenso ist das dritte Anschlusselement 32, wie aus Fig. 4 ersichtlich, an einem dritten Anschlussmodul 31 befestigt und der Verbindungsleiter des dritten Anschlusselements 32 ist mit dem Phasenleiter L3 verbunden.

Beginnend in einem Schaltfeld 48, welches unter anderem eine Sammelschiene und einen Leistungsschalter aufweist, verlaufen die drei Phasenleiter L1, L2, L3 parallel zueinander durch ein Zuleitungsrohrmodul 46 hindurch zu dem ersten Anschlussmodul 11. Von dem ersten Anschlussmodul 11 sind die drei Phasenleiter L1, L2, L3 weiter zu dem zweiten Anschlussmodul 21 und weiter zu dem dritten Anschlussmodul 31 geführt. Aus Sicht des Schaltfeldes 48 sind die Anschlussmodule 11, 21, 31 koaxial hintereinander angeordnet.

In der gezeigten Darstellung sind die Anschlussmodule 11, 21, 31 so angeordnet, dass ihre Stirnseiten parallel zueinander verlaufen und ihre Mittelachsen miteinander fluchten. Es ist jedoch auch denkbar, zwischen je zwei der hintereinander angeordneten Anschlussmodule 11, 21, 31 ein Winkelmodul einzufügen. Ein Winkelmodul ist ein gekrümmtes Rohrmodul, dessen Stirnflächen nicht parallel zueinander liegen. In diesem Fall bilden die Mittelachsen der Anschlussmodule 11, 21, 31 je einen durch die Winkelmodule vorgegebenen Winkel miteinander.

Die Anschlusselemente 13, 23, 33 verlaufen parallel zueinander und senkrecht zu der Mittelachse des Gehäuses des jeweiligen Anschlussmoduls 11, 21, 31, an welchem sie befestigt sind. Die Anschlussstellen 13, 23, 33 liegen dabei auf einer Linie.

Zwischen dem ersten Anschlussmodul 11 und dem zweiten Anschlussmodul 21 ist ein erstes Rohrmodul 40 angeordnet. Ein solches Rohrmodul weist ein zylindrisches Gehäuse mit drei innenliegenden, parallel zur Mittelachse verlaufenden Phasenleitern L1, L2, L3, auf. Die beiden Stirnseiten des ersten Rohrmoduls 40 sind dabei mit je einer Stirnseite der benachbarten Anschlussmodule 11, 21 verbunden. Durch Variation der Länge dieses ersten Rohrmoduls 40 ist der Abstand zwischen der ersten Anschlussstelle 13 und der zweiten Anschlussstelle 23 änderbar.

Ebenso ist ein zweites Rohrmodul 42 zwischen dem zweiten Anschlussmodul 21 und dem dritten Anschlussmodul 31 zur Anpassung des Abstands zwischen der zweiten Anschlussstelle 23 und der dritten Anschlussstelle 33 angeordnet. An der dem zweiten Rohrmodul 42 abgewandten Stirnseite des dritten Anschlussmoduls 31 ist eine Abschlusskappe 44 vorgesehen.

In Fig. 2 ist eine Schnittansicht durch die erste Schaltanlage 60 nach Fig. 1 entlang der Schnittlinie A dargestellt. Die Schnittebene verläuft dabei senkrecht zur Mittellinie des ersten Anschlussmodul 11 und parallel zu dessen Stirnflächen.

Ein erster Verbindungsleiter 14 ist mit der ersten Anschlussstelle 13 des ersten Anschlusselements 12 verbunden. Der erste Verbindungsleiter 14 durchgreift zunächst in radialer Richtung das Gehäuse des ersten Anschlussmoduls 11 und verläuft im Inneren des Gehäuses weiter bis zu dem ersten Phasenleiter L1, mit dem er verbunden ist. Außerhalb des Gehäuses ist der erste Verbindungsleiter 14 größtenteils von einem ersten Isolierkörper 15 umgeben.

In Fig. 3 ist eine Schnittansicht durch die erste Schaltanlage 60 entlang der Schnittlinie B dargestellt. Die Schnittebene verläuft dabei senkrecht zur Mittellinie des zweiten Anschlussmodul 21 und parallel zu dessen Stirnflächen.

Ähnlich wie in Fig. 2 ist ein zweiter Verbindungsleiter 24 mit der zweiten Anschlussstelle 23 des zweiten Anschlusselements 22 und mit dem zweiten Phasenleiter L2 verbunden, wobei der zweite Verbindungsleiter 24 teilweise von einem zweiten Isolierkörper 25 umgeben ist. Dabei ist der zweite Verbindungsleiter 24 kurz unterhalb der Durchdringungsstelle durch die Wandung des zweiten Anschlussmoduls 21 seitlich abgewinkelt und in sekantialer Richtung zum zweiten Phasenleiter L2 geführt.

In Fig. 4 ist eine Schnittansicht durch die erste Schaltanlage 60 entlang der Schnittlinie C dargestellt, wobei die Schnittebene senkrecht zur Mittellinie des dritten Anschlussmodul 31 und parallel zu dessen Stirnflächen verläuft. Ein dritter Verbindungsleiter 34 ist mit der dritten Anschlussstelle 33 des dritten Anschlusselements 32 und mit dem dritten Phasenleiter L3 verbunden und teilweise mit einem dritten Isolierkörper 35 ummantelt. Dabei ist der dritte Verbindungsleiter 34 kurz unterhalb der Durchdringungsstelle durch die Wandung des dritten Anschlussmoduls 31 seitlich abgewinkelt und in sekantialer Richtung zum dritten Phasenleiter L3 geführt.

Die Phasenleiter L1, L2, L3 sind, wie in den Darstellungen nach Fig. 2, Fig. 3 und Fig. 4 zu sehen ist, im Inneren der Gehäuse der Anschlussmodule 11, 21, 31 auf den Eckpunkten eines gleichseitigen Dreiecks angeordnet. Die Phasenleiter L1, L2, L3 verlaufen dabei parallel zueinander und parallel zu den nicht dargestellten Mittelachsen der Anschlussmodule 11, 21, 31.

Der Eckpunkt des gleichseitigen Dreiecks, an welchem der Phasenleiter L1 angeordnet ist, ist dabei der Stelle abgewandt, an welcher die Verbindungsleiter 14, 24, 34 die Gehäuse der Anschlussmodule 11, 21, 31 durchgreifen. Der Verbindungsleiter 14 verläuft im Inneren des Gehäuses des Anschlussmoduls 11 in radialer Richtung über die Mittelachse des Gehäuses hinweg bis zu dem Phasenleiter L1. Die Verbindungsleiter 24, 34 verlaufen im Inneren der Gehäuses des jeweiligen Anschlussmoduls 21, 31 zunächst in radialer Richtung auf die Mittelachse des jeweiligen Gehäuses zu, knicken dann seitlich ab und verlaufen weiter bis zu dem jeweiligen Phasenleiter L2, L3.

In dem gezeigten Beispiel nach Fig. 1, Fig. 2, Fig. 3 und Fig. 4 ist der Phasenleiter L1 mit der ersten Anschlussstelle 13 verbunden, welcher dem Schaltfeld 48 benachbart ist. Es folgen, in Richtung von dem Schaltfeld 48 weg, der Phasenleiter L2 an der zweiten Anschlussstelle 23 und der Phasenleiter L3 an der dritten Anschlussstelle 33. Ist eine andere Zuordnung der Phasenleiter L1, L2, L3 zu den Anschlussstellen 13, 23, 33 gewünscht, so ist diese Zuordnung durch Verbinden des jeweiligen Verbindungsleiters 14, 24, 34 mit dem entsprechenden Phasenleiter L1, L2, L3 im Inneren des Gehäuses des jeweiligen Anschlussmoduls 11, 21, 31 realisierbar.

Alternativ zu der beschriebenen Anordnung der Phasenleiter L1, L2, L3 auf den Eckpunkten eines gleichseitigen Dreiecks sind auch andere Anordnungen denkbar. Beispielsweise sind die Phasenleiter L1, L2, L3 auf einer Linie anordenbar, wobei diese Linie horizontal, vertikal oder in einen frei gewählten Winkel zur Erdoberfläche verlaufen kann. Ebenfalls ist die Anordnung der Phasenleiter L1, L2, L3 auf den Eckpunkten eines beliebigen Dreiecks denkbar.

In diesem Beispiel weisen die Gehäuse der Anschlussmodule 11, 21, 31 einen kreisförmigen Querschnitt auf. Alternativ sind auch Gehäuse mit einem ovalen oder polygonalen Querschnitt denkbar.

Im gezeigten Beispiel verlaufen die drei Phasenleiter L1, L2, L3 vom Schaltfeld zum ersten Anschlussmodul 11 und weiter zum zweiten Anschlussmodul 21 und weiter zum dritten Anschlussmodul 31. Es ist auch denkbar, einen Phasenleiter nur bis zu dem Anschlussmodul zu führen, mit dessen Anschlusselement er verbunden ist, und den Phasenleiter dort zu terminieren. In dem gezeigten Beispiel nach Fig. 2, Fig. 3 und Fig. 4 verlaufen in diesem Fall im Inneren des zweiten Anschlussmoduls 21 nur die Phasenleiter L2 und L3. Ebenso verläuft in diesem Fall im Inneren des dritten Anschlussmoduls 31 nur der Phasenleiter L3.

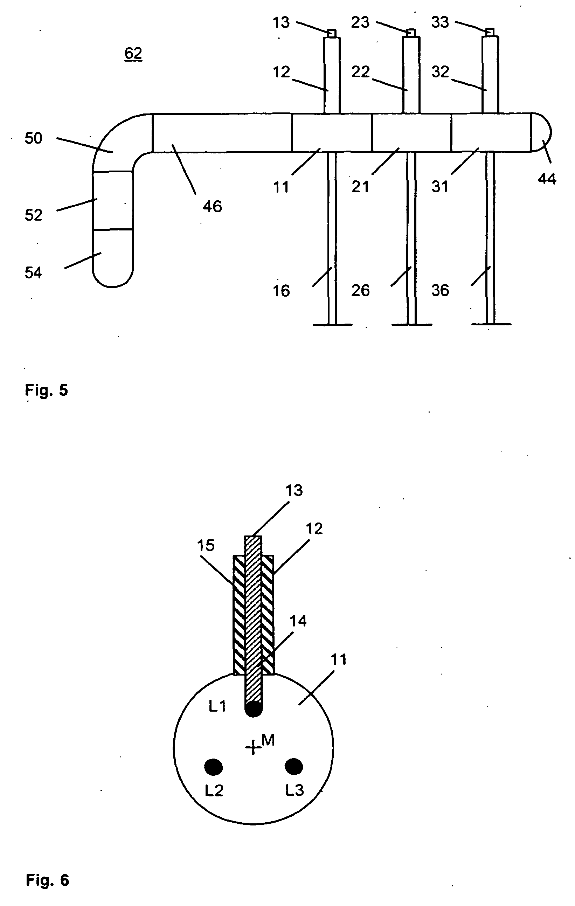

In Fig. 5 ist eine zweite Schaltanlage 62 als weitere Ausgestaltungsform der ersten Schaltanlage 60 nach Fig. 1 dargestellt. Das erste Anschlussmodul 11 ruht dabei auf einem Ende einer stabförmigen ersten Stütze 16, deren anderes Ende im Erdboden verankert ist. Ebenso ruhen das zweite Anschlussmodul 21 und dritte Anschlussmodul 31 auf einer zweiten Stütze 26, beziehungsweise auf einer dritten Stütze 36.

Das zweite Anschlussmodul 21 ist an je einer Stirnseite mit dem ersten Anschlussmodul 11 und dem dritten Anschlussmodul 31 verbunden. Die Stirnseite des dritten Anschlussmoduls 31, welche dem zweiten Anschlussmodul 21 abgewandt ist, ist mittels einer Abschlusskappe 44 verschlossen. An der Stirnseite des ersten Anschlussmoduls 11, welche dem zweiten Anschlussmodul 21 abgewandt ist, schließt das Zuleitungsrohrmodul 46 an.

Die Anschlussmodule 11, 21, 31 und das Zuleitungsrohrmodul 46 sind so angeordnet, dass ihre Mittelachsen miteinander fluchten und horizontal über dem Erdboden verlaufen. An der Stirnseite des Zuleitungsrohrmoduls 46, welche dem ersten Anschlussmodul 11 abgewandt ist, ist ein erstes Winkelmodul 50 mit einer Stirnfläche angebracht. Das erste Winkelmodul 50 ist dabei so angeordnet, dass seine andere Stirnfläche, welche dem Zuleitungsrohrmodul 46 abgewandt ist, parallel zum Erdboden verläuft. An diese Stirnfläche des Winkelmoduls 50 schließen ein vertikal zum Erdboden verlaufendes Steigrohrmodul 52 und ein zweites Winkelmodul 54 an. Das zweite Winkelmodul 54 ist mittels eines weiteren, hier nicht gezeigten Rohrmoduls mit dem hier ebenfalls nicht gezeigten Schaltfeld verbunden.

Durch eine Änderung der Länge des Steigrohrmoduls 52 und entsprechende Anpassung der Stützen 16, 26, 36 ist der Abstand der Anschlussmodule 11, 21, 31 zum Erdboden einstellbar. Durch eine Änderung der Länge des Zuleitungsrohrmoduls 46 ist die Entfernung der Anschlussmodule 11, 21, 31 vom hier nicht gezeigten Schaltfeld einstellbar.

In Fig. 6, Fig. 7 und Fig. 8 ist eine weitere Ausgestaltungsform von Anschlussmodulen dargestellt. Die Anschlussmodule 11, 21, 31 sind dabei, ähnlich wie in Fig. 1 gezeigt, unter Zwischenfügung je eines Rohrmoduls 40, 42 hintereinander angeordnet.

In Fig. 6 ist eine Schnittansicht durch das erste Anschlussmodul 11 gezeigt. Die Phasenleiter L1, L2, L3 liegen wieder im Inneren des zylindrischen Gehäuses des Anschlussmoduls 11 auf den Eckpunkten eines gleichseitigen Dreiecks. Ein Eckpunkt dieses Dreiecks ist dabei der Stelle zugewandt, an welcher der erste Verbindungsleiter 14 das Gehäuse radial durchgreift. Der auf diesem Eckpunkt liegende Phasenleiter ist mit dem ersten Verbindungsleiter 14 verbunden.

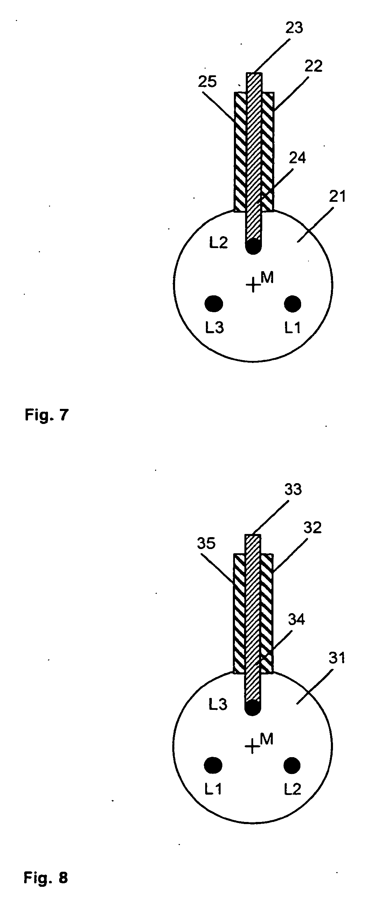

Die Phasenleiter L1, L2, L3 sind von dem ersten Anschlussmodul 11 durch das erste Rohrmodul 40 weitergeführt zu dem zweiten Anschlussmodul 21, welches in Fig. 7 in einer Schnittansicht dargestellt ist. Auf diesem Weg erfahren die Phasenleiter L1, L2, L3 je eine Drehung, beziehungsweise Wendelung, um 120° bezüglich einer durch die Gehäuse der Anschlussmodule 11, 21, 31 und der Rohrmodule 40, 42 verlaufenden Mittelachse M. Wie in Fig. 7 zu sehen ist, liegt in dem zweiten Anschlussmodul 21 der zweite Phasenleiter L2 der Stelle zugewandt, an welcher der zweite Verbindungsleiter 24 das Gehäuse des zweiten Anschlussmoduls 21 durchgreift. Der zweite Verbindungsleiter 24 ist dabei mit dem zweiten Phasenleiter L2 verbunden.

Die Phasenleiter L1, L2, L3 sind weiter von dem zweiten Anschlussmodul 21 durch das zweite Rohrmodul 42 zu dem dritten Anschlussmodul 31 geführt, das in Fig. 8 in einer Schnittansicht dargestellt ist. Auf diesem Weg erfahren die Phasenleiter L1, L2, L3 je eine weitere Drehung, beziehungsweise Wendelung, um 120° bezüglich der Mittelachse M. Wie in Fig. 8 zu sehen ist, liegt in dem dritten Anschlussmodul 31 der dritte Phasenleiter L3 der Stelle zugewandt, an welcher der dritte Verbindungsleiter 34 das Gehäuse des dritten Anschlussmoduls 31 durchgreift und ist mit diesem verbunden.

Bei der Ausgestaltungsform der Anschlussmodule 11, 21, 31 nach Fig. 6, Fig. 7 und Fig. 8 ergibt sich der Vorteil, dass alle Anschlussmodule 11, 21, 31 identisch aufgebaut sind. Die Zuordnung der Phasenleiter L1, L2, L3 zu den Anschlusselementen 12, 22, 32 erfolgt hier durch entsprechende Führung der Phasenleiter L1, L2, L3 im Inneren der Gehäuse der Anschlussmodule 11., 21, 31 sowie der Rohrmodul 40, 42.

In dem gezeigten Beispiel nach Fig. 6, Fig. 7 und Fig. 8 ist der Phasenleiter L1 mit der ersten Anschlussstelle 13 verbunden, welcher dem Schaltfeld benachbart ist. Es folgen, in Richtung von dem Schaltfeld weg, der Phasenleiter L2 an der zweiten Anschlussstelle 23 und der Phasenleiter L3 an der dritten Anschlussstelle 33. Ist eine andere Zuordnung der Phasenleiter L1, L2, L3 zu den Anschlussstellen 13, 23, 33 gewünscht, so sind die Phasenleiter L1, L2, L3 auf dem Weg vom Schaltfeld bis zu dem ersten Anschlussmodul 11 zunächst so zu führen, dass derjenige Phasenleiter, der mit der ersten Anschlussstelle 13 zu verbinden ist, an der oben beschriebenen Stelle zu liegen kommt. Durch die beiden nachfolgenden 120°-Drehungen, beziehungsweise 120°-Wendelungen, der Phasenleiter L1, L2, L3 im Uhrzeigersinn oder entgegen dem Uhrzeigersinn bezüglich der Mittelachse M ist jeder der beiden verbleibenden Phasenleiter wahlweise mit der zweiten Anschlussstelle 23 oder mit der dritten Anschlussstelle 33 verbindbar.

Alternativ zu der beschriebenen Anordnung der Phasenleiter L1, L2, L3 auf den Eckpunkten eines gleichseitigen Dreiecks sind auch andere Anordnungen denkbar. Beispielsweise sind die Phasenleiter L1, L2, L3 auf einer Linie anordenbar, wobei diese Linie horizontal, vertikal oder in einen frei gewählten Winkel zur Erdoberfläche verlaufen kann. Ebenfalls ist die Anordnung der Phasenleiter L1, L2, L3 auf den Eckpunkten eines beliebigen Dreiecks denkbar.

In diesem Beispiel weisen die Gehäuse der Anschlussmodule 11, 21, 31 einen kreisförmigen Querschnitt auf. Alternativ sind auch Gehäuse mit einem ovalen oder polygonalen Querschnitt denkbar.

Im gezeigten Beispiel verlaufen die drei Phasenleiter L1, L2, L3 vom Schaltfeld zum ersten Anschlussmodul 11 und weiter zum zweiten Anschlussmodul 21 und weiter zum dritten Anschlussmodul 31. Es ist auch denkbar, einen Phasenleiter nur bis zu dem Anschlussmodul zu führen, mit dessen Anschlusselement er verbunden ist, und den Phasenleiter dort zu terminieren. In dem gezeigten Beispiel nach Fig. 6, Fig. 7 und Fig. 8 verlaufen in diesem Fall im Inneren des zweiten Anschlussmoduls 21 nur die Phasenleiter L2 und L3. Ebenso verläuft in diesem Fall im Inneren des dritten Anschlussmoduls 31 nur der Phasenleiter L3.

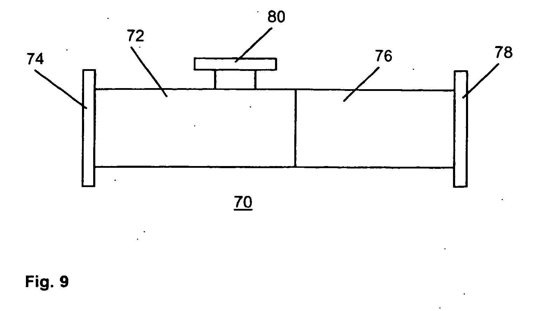

In Fig. 9 ist ein Gehäuse 70 eines Anschlussmoduls dargestellt. Das Gehäuse 70 weist ein Gussteil 72 mit einem ersten Anschlussflansch 74 und ein Schweißteil 76 mit einem zweiten Anschlussflansch 78 auf. Das Gussteil 72 und das Schweißteil 76 sind zylinderförmig ausgebildet, wobei die Anschlussflansche 74, 78 jeweils an einer Stirnseite angebracht sind. Das Gussteil 72 und das Schweißteil 76 sind mit ihren dem jeweiligen Anschlussflansch 74, 78 abgewandten Stirnseiten miteinander verbunden, vorzugsweise verschweißt. Mittels der Anschlussflansche 74, 78 ist das Anschlussmodul mit anderen Modulen, beispielweise Rohrmodulen, Winkelmodulen, Abschlusskappen oder anderen Anschlussmodulen verbindbar.

An der Mantelfläche des Gussteils 72 ist radial nach außen vorspringend ein dritter Anschlussflansch 80 vorgesehen. Der dritte Anschlussflansch 80 dient zum Anbringen eines hier nicht dargestellten Anschlusselements.

Der dritte Anschlussflansch 80 ist an beliebigen Stelle auf der Mantelfläche des Gehäuses 70 anordenbar. In der gezeigten Darstellung ist der dritte Anschlussflansch 80 außermittig bezüglich der axialen Ausdehnung des Gehäuses 70 angebracht. Das bedeutet, der Abstand des dritten Anschlussflansches 80 zum ersten Anschlussflansch 74 ist ungleich dem Abstand des dritten Anschlussflansches 80 zum zweiten Anschlussflansch 78.

### Bezugszeichenliste

- L1:: erster Phasenleiter
- L2:: zweiter Phasenleiter
- L3:: dritter Phasenleiter

- 11:: erstes Anschlussmodul
- 12:: erstes Anschlusselement
- 13:: erste Anschlussstelle
- 14:: erster Verbindungsleiter
- 15:: erster Isolierkörper
- 16:: erste Stütze

- 21:: zweites Anschlussmodul
- 22:: zweites Anschlusselement
- 23:: zweite Anschlussstelle
- 24:: zweiter Verbindungsleiter
- 25:: zweiter Isolierkörper
- 26:: zweite Stütze

- 31:: drittes Anschlussmodul
- 32:: drittes Anschlusselement
- 33:: dritte Anschlussstelle
- 34:: dritter Verbindungsleiter
- 35:: dritter Isolierkörper
- 36:: dritte Stütze

- 40:: erstes Rohrmodul
- 42:: zweites Rohrmodul
- 44:: Abschlusskappe
- 46:: Zuleitungsrohrmodul
- 48:: Schaltfeld
- 50:: erstes Winkelmodul
- 52:: Steigrohrmodul
- 54:: zweites Winkelmodul
- 60:: erste Schaltanlage
- 62:: zweite Schaltanlage

- M:: Mittelachse

- 70:: Gehäuse
- 72:: Gussteil
- 74:: erster Anschlussflansch
- 76:: Schweißteil
- 78:: zweiter Anschlussflansch
- 80:: dritter Anschlussflansch

## Patentansprüche

1. Metallgekapselte, mehrphasige elektrische Schaltanlage, mit einer der Anzahl der Phasen entsprechenden Anzahl von Phasenleitern (L1, L2, L3), welche in von Metallkapselungen gebildeten Anschlussstücken angeordnet und je über ein jedem Phasenleiter (L1, L2, L3) zugeordnetes Anschlusselement (12, 22, 32) mit je einem zugeordneten Freileitungsseil verbindbar sind,
**dadurch gekennzeichnet, dass** die Anschlussstücke von Anschlussmodulen (11, 21, 31) gebildet sind, an welchen jeweils ein Anschlusselement (12, 22, 32) angebracht ist, und dass die einzelnen Anschlussmodule (11, 21, 31) koaxial aneinander anschließen und über koaxiale Rohrmodule mit der Schaltanlage verbunden sind.

2. Schaltanlage nach Anspruch 1, **dadurch gekennzeichnet, dass** jedes Anschlussmodul (11, 21, 31) ein zylindrisches Gehäuse aufweist, und dass das an dem jeweiligen Anschlussmodul (11, 21, 31) angebrachte Anschlusselement (12, 22, 32) radial nach außen vorspringt.

3. Schaltanlage nach Anspruch 2, **dadurch gekennzeichnet, dass** das Gehäuse eines Anschlussmoduls (11, 21, 31) einen kreisförmigen Querschnitt aufweist.

4. Schaltanlage nach Anspruch 2, **dadurch gekennzeichnet, dass** das Gehäuse eines Anschlussmoduls (11,21,31) einen ovalen Querschnitt aufweist.

5. Schaltanlage nach Anspruch 2, **dadurch gekennzeichnet, dass** das Gehäuse eines Anschlussmoduls (11, 21, 31) einen polygonalen Querschnitt aufweist.

6. Schaltanlage nach einem der Ansprüche 2 oder 5, **dadurch gekennzeichnet, dass** die Stirnseiten der Anschlussmodule (11, 21, 31) parallel zueinander angeordnet sind, und dass die Mittelachsen der Anschlussmodule (11, 21, 31) miteinander fluchten.

7. Schaltanlage nach einem der vorstehenden Ansprüche, **dadurch gekennzeichnet, dass** die Anschlusselemente (12, 22, 32) parallel zueinander geführt sind.

8. Schaltanlage nach Anspruch 7, **dadurch gekennzeichnet, dass** die Anschlussstellen (13, 23, 33) der Anschlusselemente (12, 22, 32) auf einer Linie liegen.

9. Schaltanlage nach einem der vorstehenden Ansprüche, **dadurch gekennzeichnet, dass** zwischen je zwei Anschlussmodulen (11, 21, 31) mindestens ein Rohrmodul (40, 42) angeordnet ist.

10. Schaltanlage nach einem der vorstehenden Ansprüche, **dadurch gekennzeichnet, dass** die Phasenleiter (L1, L2, L3) zwischen je zwei Anschlussmodulen (11, 21, 31) eine 120°-Drehung bezüglich einer Mittelachse (M) der Anschlussmodule (11, 21, 31) erfahren.

11. Schaltanlage nach einem der Ansprüche 1 bis 9, **dadurch gekennzeichnet, dass** die Phasenleiter (L1, L2, L3) die Anschlussmodule (11, 21, 31) achsparallel zu deren Mittelachse (M) durchgreifen.

12. Schaltanlage nach einem der vorstehenden Ansprüche, **dadurch gekennzeichnet, dass** die Phasenleiter (L1, L2, L3) auf den Eckpunkten eines gleichseitigen Dreiecks angeordnet sind.

13. Schaltanlage nach einem der Ansprüche 1 bis 11, **dadurch gekennzeichnet, dass** die Phasenleiter (L1, L2, L3) auf den Eckpunkten eines beliebigen Dreiecks angeordnet sind.

14. Schaltanlage nach einem der Ansprüche 1 bis 11, **dadurch gekennzeichnet, dass** die Phasenleiter (L1, L2, L3) auf einer Linie angeordnet sind und jeweils einen Abstand zueinander aufweisen.

15. Schaltanlage nach einem der vorstehenden Ansprüche, **dadurch gekennzeichnet, dass** alle Phasenleiter (L1, L2, L3) durch jedes der Anschlussmodule (11, 21, 31) geführt sind.

16. Schaltanlage nach einem der Ansprüche 1 bis 14, **dadurch gekennzeichnet, dass** ein Phasenleiter (L1, L2, L3) lediglich bis zu dem Anschlussmodul (11, 21, 31) geführt ist, in welchem er mit einem Anschlusselement (12, 22, 32) verbunden ist, und dort terminiert ist.

17. Schaltanlage nach einem der vorstehenden Ansprüche, **dadurch gekennzeichnet, dass** mindestens ein Gehäuse (70) eines Anschlussmoduls (11, 21, 31) mindestens ein zylinderförmiges Gussteil (72) und mindestens ein zylinderförmiges Schweißteil (76) aufweist, wobei das mindestens eine Gussteil (72) und das mindestens eine Schweißteil (76) jeweils stirnseitig miteinander verbunden sind.

18. Schaltanlage nach einem der vorstehenden Ansprüche, **dadurch gekennzeichnet, dass** mindestens ein Anschlusselement (12, 22, 32) an einer beliebigen Stelle auf der Mantelfläche des zugehörigen Anschlussmoduls (11, 21, 31) angebracht ist.

## Claims

1. Metal-encapsulated, polyphase electrical switchgear assembly, comprising a number of phase conductors (L1, L2, L3) which corresponds to the number of phases, which phase conductors are arranged in connection pieces formed by metal encapsulations and can be connected to in each case one associated overhead line conductor, in each case via a connection element (12, 22, 32) associated with each phase conductor (L1, L2, L3), **characterized in that** the connection pieces are formed by connection modules (11, 21, 31), to which in each case one connection element (12, 22, 32) is fitted, and **in that** the individual connection modules (11, 21, 31) adjoin one another coaxially and are connected to the switchgear assembly via coaxial tubular modules.

2. Switchgear assembly according to Claim 1, **characterized in that** each connection module (11, 21, 31) has a cylindrical housing, and **in that** the connection element (12, 22, 32) fitted to the respective connection module (11, 21, 31) protrudes radially outwards.

3. Switchgear assembly according to Claim 2, **characterized in that** the housing of a connection module (11, 21, 31) has a circular cross section.

4. Switchgear assembly according to Claim 2, **characterized in that** the housing of a connection module (11, 21, 31) has an oval cross section.

5. Switchgear assembly according to Claim 2, **characterized in that** the housing of a connection module (11, 21, 31) has a polygonal cross section.

6. Switchgear assembly according to either of Claims 2 and 5, **characterized in that** the end sides of the connection modules (11, 21, 31) are arranged parallel to one another, and **in that** the mid-axes of the connection modules (11, 21, 31) are aligned with one another.

7. Switchgear assembly according to one of the preceding claims, **characterized in that** the connection elements (12, 22, 32) are guided parallel to one another.

8. Switchgear assembly according to Claim 7, **characterized in that** the connection points (13, 23, 33) of the connection elements (12, 22, 32) lie on one line.

9. Switchgear assembly according to one of the preceding claims, **characterized in that** at least one tubular module (40, 42) is arranged between in each case two connection modules (11, 21, 31).

10. Switchgear assembly according to one of the preceding claims, **characterized in that** the phase conductors (L1, L2, L3) between in each case two connection modules (11, 21, 31) undergo a 120° rotation with respect to a mid-axis (M) of the connection modules (11, 21, 31).

11. Switchgear assembly according to one of Claims 1 to 9, **characterized in that** the phase conductors (L1, L2, L3) pass through the connection modules (11, 21, 31) axially parallel to the mid-axis (M) thereof.

12. Switchgear assembly according to one of the preceding claims, **characterized in that** the phase conductors (L1, L2, L3) are arranged at the corner points of an equilateral triangle.

13. Switchgear assembly according to one of Claims 1 to 11, **characterized in that** the phase conductors (L1, L2, L3) are arranged at the corner points of any desired triangle.

14. Switchgear assembly according to one of Claims 1 to 11, **characterized in that** the phase conductors (L1, L2, L3) are arranged on one line and each have a distance from one another.

15. Switchgear assembly according to one of the preceding claims, **characterized in that** all of the phase conductors (L1, L2, L3) are guided through each of the connection modules (11, 21, 31).

16. Switchgear assembly according to one of Claims 1 to 14, **characterized in that** a phase conductor (L1, L2, L3) is guided only up to the connection module (11, 21, 31), in which it is connected to a connection element (12, 22, 32), and is terminated there.

17. Switchgear assembly according to one of the preceding claims, **characterized in that** at least one housing (70) of a connection module (11, 21, 31) has at least one cylindrical cast part (72) and at least one cylindrical welded part (76), the at least one cast part (72) and the at least one welded part (76) being connected to one another in each case at the end sides.

18. Switchgear assembly according to one of the preceding claims, **characterized in that** at least one connection element (12, 22, 32) is fitted at any desired point on the lateral surface of the associated connection module (11, 21, 31).

## Revendications

1. Équipement de commutation électrique multiphasé à enveloppe métallique, comprenant un nombre de conducteurs de phase (L1, L2, L3) correspondant au nombre de phases, lesquels sont disposés dans des pièces de raccordement formées par des enveloppes métalliques et peuvent être reliés respectivement par le biais d'un élément de raccordement (12, 22, 32) associé à chaque conducteur de phase (L1, L2, L3) avec un câble pour ligne électrique aérienne à chaque fois associé,
**caractérisé en ce que** les pièces de raccordement sont formées par des modules de raccordement (11, 21, 31) sur lesquels est à chaque fois monté un élément de raccordement (12, 22, 32) et **en ce que** les modules de raccordement (11, 21, 31) individuels se raccordent les uns aux autres de manière coaxiale et sont reliés avec l'équipement de commutation par le biais de modules tubulaires coaxiaux.

2. Équipement de commutation selon la revendication 1, **caractérisé en ce que** chaque module de raccordement (11, 21, 31) présente un boîtier cylindrique et **en ce que** l'élément de raccordement (12, 22, 32) monté sur le module de raccordement (11, 21, 31) correspondant fait saillie vers l'extérieur dans le sens radial.

3. Équipement de commutation selon la revendication 2, **caractérisé en ce que** le boîtier d'un module de raccordement (11, 21, 31) présente une section transversale de forme circulaire.

4. Équipement de commutation selon la revendication 2, **caractérisé en ce que** le boîtier d'un module de raccordement (11, 21, 31) présente une section transversale de forme ovale.

5. Équipement de commutation selon la revendication 2, **caractérisé en ce que** le boîtier d'un module de raccordement (11, 21, 31) présente une section transversale de forme polygonale.

6. Équipement de commutation selon l'une des revendications 2 à 5, **caractérisé en ce que** les côtés frontaux des modules de raccordement (11, 21, 31) sont disposés parallèlement les uns aux autres et **en ce que** les axes centraux des modules de raccordement (11, 21, 31) sont alignés les uns avec les autres.

7. Équipement de commutation selon l'une des revendications précédentes, **caractérisé en ce que** les éléments de raccordement (12, 22, 32) sont guidés parallèlement les uns avec les autres.

8. Équipement de commutation selon la revendication 7, **caractérisé en ce que** les points de raccordement (13, 23, 33) des éléments de raccordement (12, 22, 32) se trouvent sur une ligne.

9. Équipement de commutation selon l'une des revendications précédentes, **caractérisé en ce qu'**au moins un module tubulaire (40, 42) est disposé à chaque fois entre deux modules de raccordement (11, 21, 31).

10. Équipement de commutation selon l'une des revendications précédentes, **caractérisé en ce que** les conducteurs de phase (L1, L2, L3) subissent à chaque fois entre deux modules de raccordement (11, 21, 31) une rotation de 120° par rapport à un axe central (M) des modules de raccordement (11, 21, 31).

11. Équipement de commutation selon l'une des revendications 1 à 9, **caractérisé en ce que** les conducteurs de phase (L1, L2, L3) traversent les modules de raccordement (11, 21, 31) avec leur axe parallèle à leur axe central (M).

12. Équipement de commutation selon l'une des revendications précédentes, **caractérisé en ce que** les conducteurs de phase (L1, L2, L3) sont disposés aux coins d'un triangle équilatéral.

13. Équipement de commutation selon l'une des revendications 1 à 11, **caractérisé en ce que** les conducteurs de phase (L1, L2, L3) sont disposés aux coins d'un triangle quelconque.

14. Équipement de commutation selon l'une des revendications 1 à 11, **caractérisé en ce que** les conducteurs de phase (L1, L2, L3) sont disposés sur une ligne et présentent respectivement un écart entre eux.

15. Équipement de commutation selon l'une des revendications précédentes, **caractérisé en ce que** tous les conducteurs de phase (L1, L2, L3) sont menés à travers chacun des modules de raccordement (11, 21, 31).

16. Équipement de commutation selon l'une des revendications 1 à 14, **caractérisé en ce qu'**un conducteur de phase (L1, L2, L3) est uniquement mené jusqu'au module de raccordement (11, 21, 31) dans lequel il est relié avec un élément de raccordement (12, 22, 32) et y est terminé.

17. Équipement de commutation selon l'une des revendications précédentes, **caractérisé en ce qu'**au moins un boîtier (70) d'un module de raccordement (11, 21, 31) présente au moins une pièce coulée (72) de forme cylindrique et au moins une pièce soudée (76) de forme cylindrique, l'au moins une pièce coulée (72) et l'au moins une pièce soudée (76) étant respectivement reliées l'une avec l'autre du côté frontal.

18. Équipement de commutation selon l'une des revendications précédentes, **caractérisé en ce qu'**au moins un élément de raccordement (12, 22, 32) est monté en un endroit quelconque sur la surface d'enveloppe du module de raccordement (11, 21, 31) correspondant.
